# EUROPEAN PATENT SPECIFICATION

(11) **EP 3 368 385 B1**
(45) Date of publication and mention of the grant of the patent: **28.08.2019**
(21) Application number: 16809169.2
(22) Date of filing: 26.10.2016
(51) Int. Cl.: B60T 7/20, B60T 17/18

(54) **BRAKING DEVICE FOR TRAILERS OF AGRICULTURAL MACHINES**
BREMSVORRICHTUNG FÜR ANHÄNGER VON LANDWIRTSCHAFTLICHEN MASCHINEN
DISPOSITIF DE FREINAGE POUR REMORQUES DE MACHINES AGRICOLES

(30) Priority: 30.10.2015 IT UB20155308
(43) Date of publication of application: 05.09.2018
(73) Proprietor: SAFIM S.p.A., 41123 Modena (IT)
(72) Inventor: MAMEI, Eronne, 41123 Modena (IT); MAMEI, Enrico, 41123 Modena (IT); MAMEI, Andrea, 41123 Modena (IT)
(74) Representative: Zoli, Filippo
(86) International application number: PCT/IB2016/056434
(87) International publication number: WO 2017/072672

(56) References cited:
- DE-A1-102007 047 691
- GB-A- 2 492 124

## Description

### Technical Field

The present invention relates to a braking device for trailers of agricultural machines.

### Background Art

As is known, to date the towing vehicles are connected to their respective trailer by means of a connection device that allows placing the respective braking systems in communication to one another, in such a way that the braking of the towing vehicle operated by the operator also causes the braking of the towed trailer.

The braking system of the trailer is therefore driven by the braking system of the tractor in order to synchronize the braking forces acting on the same.

GB 2 492 124 A discloses a vehicle braking system having an electrically operable emergency braking override valve for avoiding the emergency brake applying valve from being vented.

According to the recently introduced regulations the connection device between the towing vehicle and its trailer must comprise a portion connectable to the trailer and having a pair of female couplings intended to receive the corresponding male couplings connectable to the towing vehicle.

In particular there is a first female coupling communicating with a control line connectable to the braking system of the trailer and a second female coupling communicating with an additional line connectable to the parking and/or automatic brake of the trailer itself.

The additional line is therefore the line that allows applying the on-off braking of the trailer in the case of an emergency, or in the case of detachment of the trailer from the towing vehicle.

If the automatic braking of the trailer is obtained through the use of springs, this is also valid for the parking braking. More particularly, in braking devices with springs, in normal operation conditions the brakes are kept off by a fluid-operated cylinder which has the purpose of compressing the respective springs. The moment when the cylinder is no longer supplied by a working fluid under pressure, the springs are released to allow the activation of the brake.

It is therefore clear that in an emergency there is the need to receive the oil that kept the above-mentioned cylinder under pressure in order to allow the activation of the parking brake.

This would be possible only for the trailers that have a connection with the drain line of the respective towing vehicle.

Since today it is practically impossible to find trailers that have this type of connection, it follows that the use of this type of brakes with the coupling devices required by the regulations in force is practically unfeasible.

### Description of the Invention

The main aim of the present invention is to provide a braking device for trailers of agricultural machines, which allows the use of automatic and/or parking brakes with springs on any type of trailer and irrespectively of the connections present on the corresponding towing vehicle.

Within this aim, one object of the present invention is to permit the manual release of the automatic and/or parking brake even when the towing vehicle is not connected to the corresponding trailer.

Another object of the present invention is to provide a braking device for trailers of agricultural machines which allows to overcome the mentioned drawbacks of the prior art within the ambit of a simple, rational, easy, effective to use and affordable solution.

The above mentioned objects are achieved by the present braking device for trailers of agricultural machines according to claim 1.

### Brief Description of the Drawings

Other characteristics and advantages of the present invention will become better evident from the description of a preferred, but not exclusive, embodiment of a braking device for trailers of agricultural machines, illustrated only by way of an indicative, but non-limiting, example in the accompanying drawings, in which:
Figure 1 is a schematic representation of a device according to the invention in a first embodiment and in a first operation configuration;
Figure 2 is a schematic representation of the device of Figure 1 in a second operation configuration;
Figure 3 is a schematic representation of a device according to the invention in a second embodiment and in a first operation configuration;
Figure 4 is a schematic representation of the device of Figure 3 in a second operation configuration;
Figure 5 is a schematic representation of the device of Figure 3 in a third operation configuration.

### Embodiments of the Invention

With particular reference to such figures, reference numeral 1 globally indicates a braking device for trailers of agricultural machines.

The device 1, connectable to the trailer of an agricultural machine or other operating machine, comprises a first and a second female coupling, schematized in the figures by the reference numbers 2 and 3, associable with a trailer and adapted to receive related male couplings, schematized in the figures by the reference numbers 4 and 5, associable with a towing vehicle and adapted to send a pressurized fluid inside the respective female couplings.

The device 1 then comprises at least one control line 6 communicating with the first female coupling 2 and connectable to the braking system F of the trailer, at least one additional line 7 communicating with the second female coupling 3 and connectable to the automatic and/or parking brake G of the trailer.

In the preferred embodiments shown in the figures, the device 1 also comprises at least one auxiliary line 8 connectable to the additional line 7 following the detachment of the second female coupling 3 from its male coupling 5.

Advantageously, first valve means 9 are adapted to isolate and place in communication the additional line 7 with the auxiliary line 8 following the coupling and the uncoupling, respectively, of the second female coupling 3 from its male coupling 5.

Preferably, the auxiliary line 8 is connected to the control line 6 by means of second one-way valve means 10 adapted to allow only the outflow of the working fluid from the auxiliary line 8 to the control line 6 following a pressure difference between them.

The device 1 comprises, therefore, also a command device 11 of the automatic and/or parking brake G.

The command device 11 comprises first elastic means 12 adapted to activate the automatic and/or parking brake G and at least one fluid-operated cylinder 13 adapted to interact with the first elastic means themselves.

More in detail, the first elastic means 12 are adapted to actuate the command of the automatic and/or parking brake G for the activation of the same.

The cylinder 13 in turn comprises a body 13a inside which is housed in a sliding manner one rod 13b, which interacts with the first elastic means 12 and on which at least a first chamber 14 operates in contrast to the action of first elastic means 12 to cause the release of the automatic and/or parking brake G. According to the invention, the cylinder 13 also comprises a second chamber 15, which operates on the rod 13b on the opposite side of the first chamber 14, or in the same direction as the action of the first elastic means 12.

Preferably, the cylinder 13 is of the double-acting type and the operational surfaces of the rod 13b facing the chambers 14 and 15 are substantially equal to each other.

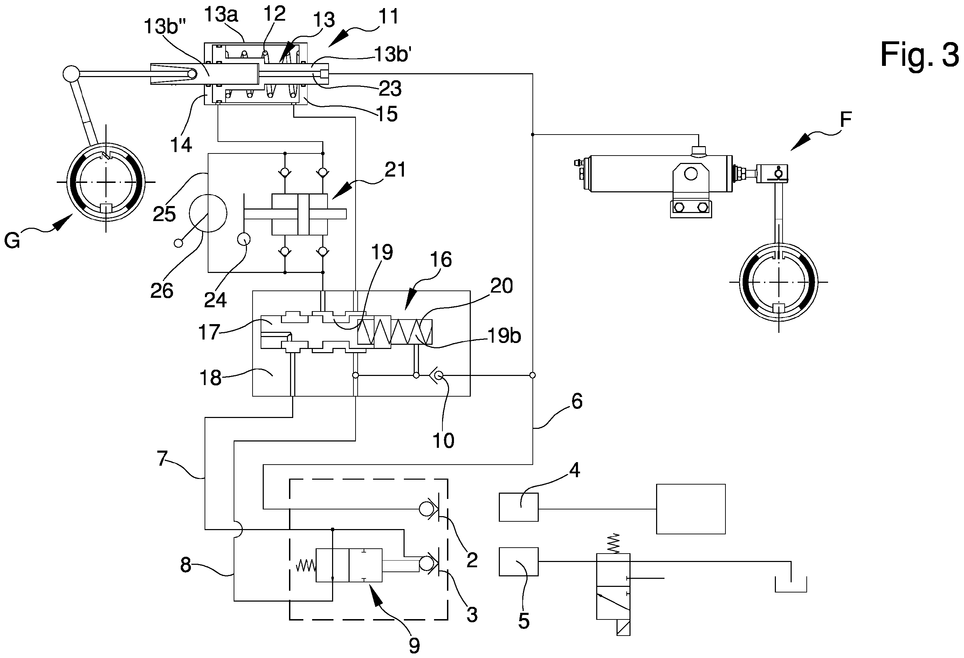

In the embodiment shown in Figures 3 to 5, the cylinder 13 is connected in a fluid-operated manner to the service braking system F of the trailer.

In this embodiment, the automatic and/or parking brake G also performs the service brake function.

Advantageously, in this second embodiment, the rod 13b comprises a first and a second portion, respectively identified with the reference numbers 13b' and 13b", movable reciprocally between them.

More particularly, the first portion 13b' is adapted to interact with the first elastic means 12 depending on the pressure present in the chambers 14, 15, and a second portion 13b" is adapted to interact with the automatic and/or parking brake G to command the activation/deactivation thereof and activate also the service braking. Between the first and the second portion 13b', 13b" is defined at least a third chamber 22 communicating with the control line 6 and adapted to move the second portion 13b" to command the activation of the automatic and/or parking brake G (which, as mentioned above, operates in this embodiment also as a service brake) following the increase in pressure along said control line 6. More in detail, the third chamber 22 is placed in communication with the control line 6 through a canal 23 formed in the first portion 13b'. It follows, therefore, that in this second embodiment, the automatic and/or parking brake G, which also operates as a service brake, is activated following the increase in pressure along the control line 6 irrespective of the pressure present in the chambers 14 and 15.

According to the invention, between the second female coupling 3 and the command device 11 is interposed a valve 16, which has a spool 17 movable between a normal operation configuration, in which it places the first chamber 14 in communication with the additional line 7 and the second chamber 15 with a lower pressure line so as to allow draining the working fluid contained in it and permit the deactivation of the automatic and/or parking brake G, and a braking configuration, in which it places the first and the second chamber 14, 15 in communication between them, so as to make ineffective the action of the rod 13b (which is therefore floating) on the first elastic means 12 which by expanding activate the automatic and/or parking brake G.

In the preferred embodiments represented in the figures, in the normal operation configuration, the second chamber 15 is placed in communication with the auxiliary line 8, so that the working fluid contained therein drains along the control line 6, via the second valve means 10, when this is at a lower pressure, while in the braking configuration, both chambers 14, 15 are placed in communication with the auxiliary line 8.

More particularly, the valve 16 comprises a body 18 which defines a seat 19 inside which the spool 17 is housed in a sliding manner. As visible in the figures, the seat 19 has four openings communicating with the additional line 7, with the auxiliary line 8, with the first chamber 14 and with the second chamber 15, respectively.

On the spool 17 operate two compartments, opposite to one another, for example defined inside the seat 19 between the ending parts of the spool itself and the body 18, of which a first compartment 19a placed in communication with the additional line 7 and adapted to push the spool 17 towards the normal operation configuration and a second compartment 19b, inside which are housed second elastic means 20, operating in a direction opposite to the first compartment 19a.

In the embodiments represented in the figures, the second compartment 19b is placed in communication with the auxiliary line 8, to drain and receive the working fluid, which operates therefore on the spool 17 in the same direction as the action exerted by the second elastic means 20.

The spool 17 is therefore adapted to move towards the normal operation configuration following the connection of the female couplings 2, 3 to the corresponding male couplings 4, 5 and the pressurization of the additional line 7 and to move towards the braking configuration following the uncoupling between them, in such case the connection occurring between the additional line 7 and the auxiliary line 8 by means of the first valve means 9 and, therefore, the connection between the compartments 19a and 19b.

More in detail, the spool 17 is adapted to substantially move the same volume of working fluid in both directions.

The fact that the cylinder 13 and the spool 17 move the same volume of fluid in both directions requires that the hydraulic action is neutral following the connection between the additional line 7 and the auxiliary line 8, and therefore the mutual connection between the chambers 14 and 15, which occurs in case of the detachment of the second female coupling 3 from its male coupling 5.

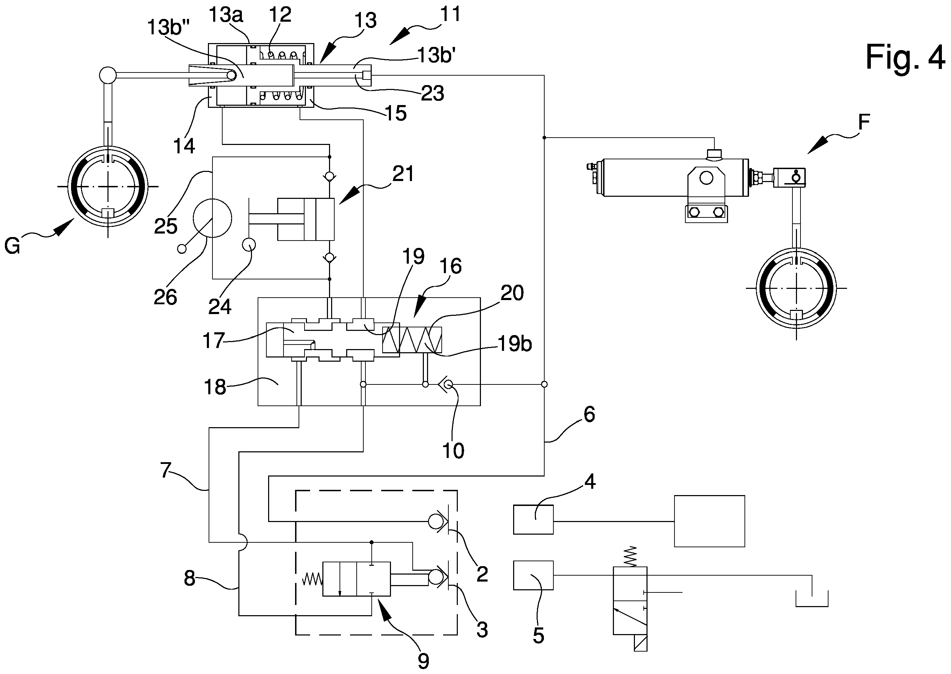

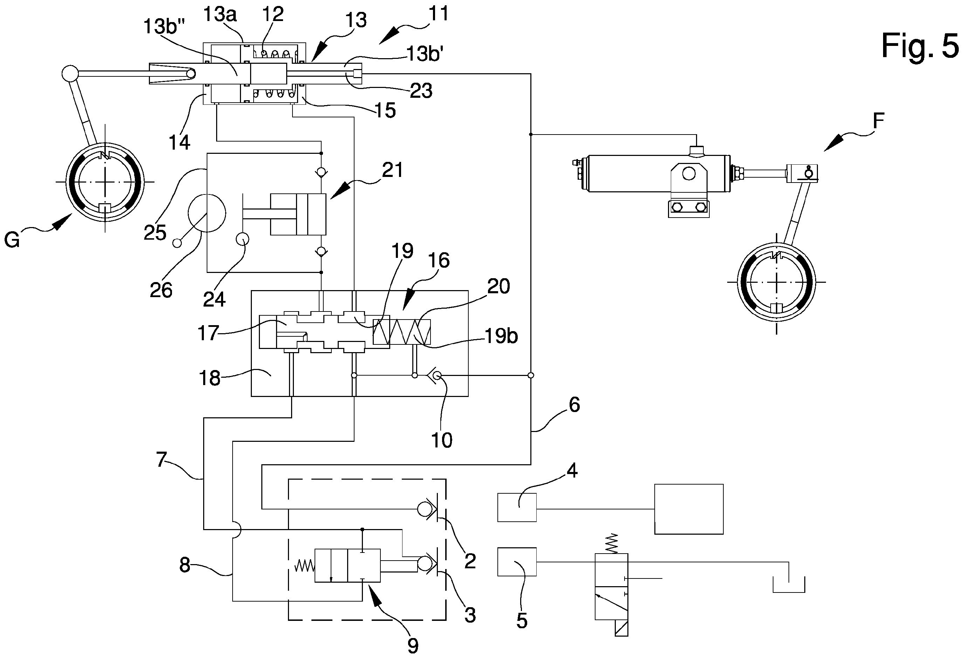

Advantageously, the device 1 comprises pumping means 21 interposed between the command device 11 and the valve 16, which are manually operable to supply the first chamber 14 of the cylinder 13 so as to release the automatic and/or parking brake G even when the trailer is detached from the towing vehicle. In the embodiment represented in Figure 3, the pumping means 21 are of the double acting type, while in the embodiments of Figures 4 and 5, the pumping means 21 are of the single acting type.

Preferably, there is also a supply/drain channel 25 interposed between the valve 16 and the command device 11 and arranged in parallel to the pumping means 21. The supply/drain channel 25 allows the inflow and outflow of the working fluid from the first chamber 14 towards the valve 16 following the attachment and the detachment, respectively, of the trailer from the towing vehicle and, therefore, the connection between the additional line 7 and the auxiliary line 8. Along the supply/drain channel 25 is also positioned a valve device 26 manually operable to move it from an open configuration, in which it allows the passage of the working fluid, to a closed configuration, in which it prevents the passage of the working fluid.

More particularly, the valve device 26 is brought to the closed configuration when the second female coupling 3 is separated from its male coupling 5 and there is the need to pressurize the first chamber 14 to compress the first elastic means 12 and thus release the automatic and/or parking brake G. By bringing the valve device 26 to the closed configuration it is in fact possible to supply the first chamber 14 by means of the pumping means 21.

Suitably, the valve device 26 comprises opening means, e.g. of the spring type, (not visible in detail in the figures) operatively connected to the additional line 7 and adapted to return the valve device itself from the closed configuration to the open configuration upon reaching a predefined pressure of the working fluid along the additional line 7.

Additionally, the valve device 26 can be operable automatically following the accidental detachment of the trailer from the towing vehicle, or following the detachment of the female couplings 2, 3 from the relative male couplings 4, 5. The operation of the present invention is as follows.

Following the connection between the trailer and the towing vehicle and the actuation of the relative command positioned on the towing vehicle itself, the additional line 7 receives the working fluid under pressure, between 15 bar and 35 bar, and the first valve means 9 isolate the additional line itself from the auxiliary line 8.

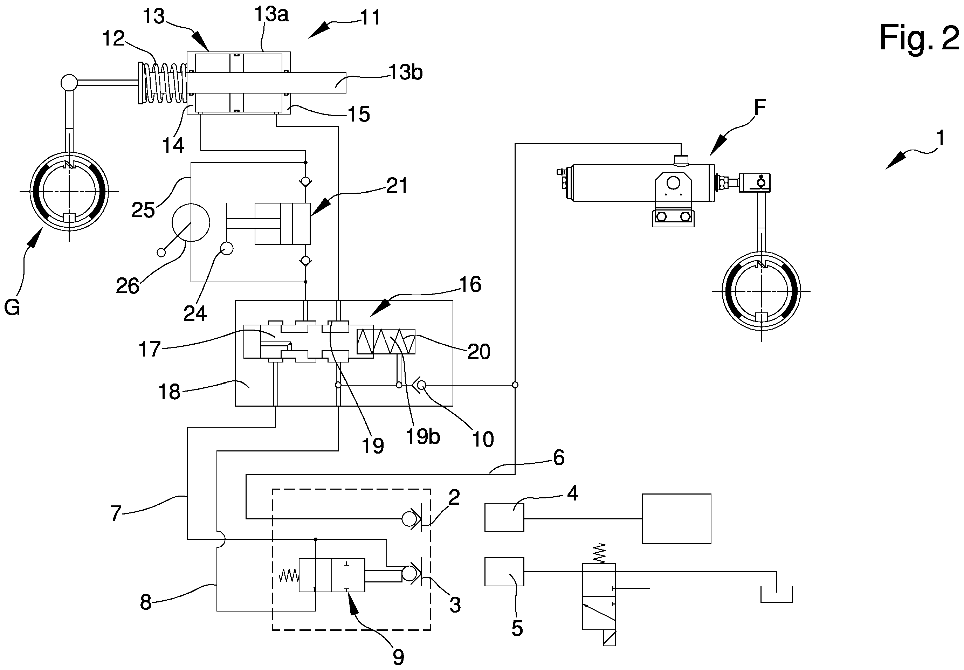

It follows that the pressure inside the first compartment 19a operating on the spool 17 increases to exceed the force exerted on the opposite side by the second elastic means 20, causing the displacement thereof to the normal operation configuration, represented in Figures 2 and 4.

In this configuration, the working fluid coming from the additional line 7 enters therefore the first chamber 14 of the cylinder 13 so as to cause it to move in contrast to the first elastic means 12. The compression of the first elastic means 12 causes the deactivation of the automatic and/or parking brake G. Simultaneously, the working fluid in the second chamber 15 of the cylinder 13 and in the second compartment 19b flows out through the auxiliary line 8 and drains, via the second valve means 10, on the control line 6 following a pressure difference between the two lines. This pressure difference occurs at least when the pressure of the working fluid that supplies the service braking system F drops to zero.

The moment when the trailer is separated from the towing vehicle, and more particularly the second male coupling protrudes from the second female coupling, the first valve means 9 change their state by placing the additional line 7 in mutual communication with the auxiliary line 8.

This involves that the force exerted on opposite sides on the spool 17 by the working fluid on the additional line 7 and on the auxiliary line 8 is substantially the same, and this is the reason why the spool itself moves from the normal operation configuration to the braking one due to the effect of the thrust exerted on it by the second elastic means 20.

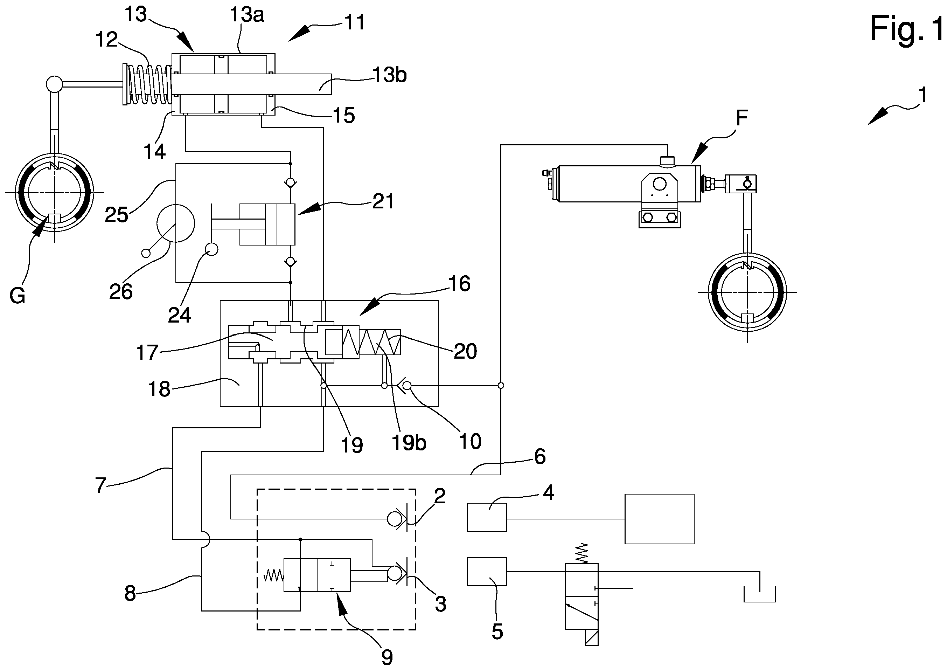

After reaching this configuration, shown in Figures 1 and 3, the first and the second chambers 14, 15 of the cylinder 13 are both placed in communication with each other and with the auxiliary line 8, in turn communicating with the additional line 7, and this is the reason why the rod 13b is free to move within its body 13a. It follows, therefore, that the first elastic means 12 are free to expand thereby activating the automatic and/or parking brake G.

In case there is the need to release the automatic and/or parking brake G with the trailer detached from the towing vehicle, it is possible to operate the pumping means 21. More in detail, it is possible to manually operate the activation element 24 so as to convey the working fluid within the cylinder 13 towards the first chamber 14, by pressurizing it, so as to cause the compression of the first elastic means 12.

In the second embodiment represented in the Figures from 3 to 5, also with the valve 16 in the normal operation configuration, i.e. with the first elastic means 12 compressed, the automatic and/or parking brake G is activated following the pressurization of the control line 6, thus operating also as a service brake. In this operation configuration, represented in Figure 5, the pressurized working fluid present along the control line 6 enters the third chamber 22 by exerting a force on the second portion 13b" so as to push it away from the first portion 13b' and actuate the automatic and/or parking brake G.

Figure 5 shows the operation configuration in which the automatic and/or parking brake G which, as discussed above, also performs the function of service brake, is activated due to the effect of the pressure present along the control line 6 despite the valve 16 is in the normal operation configuration and the first elastic means are, therefore, compressed.

It has in practice been observed that the described invention achieves the intended objects and in particular the fact is underlined that the braking device making the subject of the present invention allows the use of automatic and/or parking brakes with springs on any trailer, and irrespectively of the type of dual-line braking system of its towing vehicle.

## Claims

1. Braking device (1) for trailers of agricultural machines, comprising:
- a first and a second female coupling (2, 3) associable to a trailer and able to receive relative male couplings (4, 5) associable to a towing vehicle to send a pressurized fluid inside respective female couplings (2, 3);
- at least one control line (6) communicating with said first female coupling (2) and connectable to the service braking system (F) of the trailer, at least one additional line (7) communicating with said second female coupling (3) and connectable to the automatic and/or parking brake (G) of the trailer;
- a command device (11) of the automatic and/or parking brake (G) of the trailer comprising first elastic means (12) able to activate the automatic and/or parking brake itself and at least a fluid-operated cylinder (13) able to interact with the first elastic means themselves; said fluid-operated cylinder (13) having at least a first chamber (14) able to move the relative rod (13b) in the opposite direction to the action of said first elastic means (12);
**characterized in that** said cylinder (13) has at least a second chamber (15) acting on the opposite side of said first chamber (14) and able to move the respective rod (13b) in the same direction as the action of said first elastic means (12); and **in that** it comprises
at least one valve (16) interposed between said female couplings (2, 3) and said command device (11) and having a spool (17) movable between a braking configuration, in which said first and second chambers (14, 15) are mutually placed in communication, allowing said first elastic means (12) to expand freely, and a normal operation configuration, in which said first chamber (14) is placed in communication with said additional line (7) and said second chamber (15) is connectable to a lower pressure line so as to compress said first elastic means (12) to release the automatic and/or parking brake (G).

2. Device (1) according to claim 1, **characterized in that** on said spool (17) act, from opposite sides, a first compartment (19a) communicating with said additional line (7) and able to push it towards the normal operation configuration and a second compartment (19b) in which second elastic means (20) are housed.

3. Device (1) according to claim 1 or 2, **characterized in that** it comprises at least one auxiliary line (8) connectable to said additional line (7) following the detachment of said second female coupling (3) from the relative male coupling (5), where said first and second chambers (14, 15) are placed in communication with said auxiliary line (8) with said valve (16) in the braking configuration and are placed in communication with said additional line (7) and with said auxiliary line (8) respectively, with said valve (16) in the normal operation configuration.

4. Device (1) according to claim 3, **characterized in that** said auxiliary line (8) is communicating with said second compartment (19b), said spool (17) moving towards the normal operation configuration following the connection of said second female coupling (3) with the relative male coupling (5), with said additional line (7) under pressure, and moving towards the braking configuration following the uncoupling thereof with said auxiliary line (8) communicating with said additional line (7).

5. Device (1) according to claim 3 or 4, **characterized in that** it comprises first valve means (9) able to isolate and place in communication said additional line (7) and said auxiliary line (8) respectively, following the coupling and uncoupling of the second female coupling (3) from the relative male coupling (5).

6. Device (1) according to one or more of claims 2 to 5, **characterized in that** said auxiliary line (8) is connected to said control line (6) by means of second one-way valve means (10).

7. Device (1) according to one or more of the preceding claims, **characterized in that** said fluid-operated cylinder (13) is of the double-acting type and **in that** the operational surfaces of said rod (13b) facing said chambers (14, 15) are substantially equal to each other.

8. Device (1) according to one or more of the preceding claims, **characterized in that** it comprises pumping means (21) interposed between said command device (11) and said valve (16) and manually operable to supply said first chamber (14) of the fluid-operated cylinder (13) and **in that** it comprises at least one supply/drain channel (25) interposed between said valve (16) and said command device (11) and arranged in parallel to said pumping means (21).

9. Device (1) according to claim 8, **characterized in that** said pumping means (21) are of the double acting type.

10. Device (1) according to claim 8 or 9, **characterized in that** it comprises at least one valve device (26) arranged along said supply/drain channel (25) and manually operable to move it from an open configuration to a closed configuration.

11. Device (1) according to claim 10, **characterized in that** said valve device (26) comprises opening means operatively connected to said additional line (7) and able to return the valve device itself from the closed configuration to the open configuration upon reaching a predefined pressure of the working fluid along said additional line (7).

12. Device (1) according to claim 10 or 11, **characterized in that** said valve device (26) is operable as a result of the accidental detachment of said female couplings (2, 3) from the relative male couplings (4, 5).

13. Device (1) according to one or more of the preceding claims, **characterized in that** said cylinder (13) is connected in a fluid-operated manner to said service braking system (F) of the trailer.

14. Device (1) according to claim 13, **characterized in that** said rod (13b) comprises a first portion (13b') that interacts with said first elastic means (12) and a second portion (13b") that interacts with the automatic and/or parking brake (G) and which is movable with respect to the first portion itself; between said first and said second portion (13b', 13b") being defined a third chamber (22) communicating with said control line (6) and able to move said second portion (13b") to command the activation of the automatic and/or parking brake (G) following the increase in pressure along said control line (6).

## Patentansprüche

1. Bremsvorrichtung (1) für Anhänger von landwirtschaftlichen Maschinen, umfassend:
- eine erste und eine zweite Kupplungsbuchse (2, 3), die einem Anhänger zuordenbar und in der Lage sind, entsprechende Kupplungsstecker (4, 5) aufzunehmen, die einem Zugfahrzeug zuordenbar sind, um ein druckbeaufschlagtes Fluid in jeweilige Kupplungsbuchsen (2, 3) zu senden;
- mindestens eine Steuerleitung (6), die mit der ersten Kupplungsbuchse (2) in Verbindung steht und mit dem Betriebsbremssystem (F) des Anhängers verbindbar ist, mindestens eine zusätzliche Leitung (7), die mit der zweiten Kupplungsbuchse (3) in Verbindung steht und mit der automatischen Bremse und/oder Feststellbremse (G) des Anhängers verbindbar ist;
- eine Steuerungsvorrichtung (11) der automatischen Bremse und/oder Feststellbremse (G) des Anhängers, umfassend erste elastische Mittel (12), die in der Lage sind, die automatische Bremse und/oder Feststellbremse selbst zu aktivieren, und mindestens einen fluidbetriebenen Zylinder (13), der in der Lage ist, mit den ersten elastischen Mitteln selbst zu interagieren; wobei der fluidbetriebene Zylinder (13) mindestens eine erste Kammer (14) aufweist, die in der Lage ist, die entsprechende Stange (13b) in der entgegengesetzten Richtung zur Wirkung der ersten elastischen Mittel (12) zu bewegen;
**dadurch gekennzeichnet, dass** der Zylinder (13) mindestens eine zweite Kammer (15) aufweist, die auf der gegenüberliegenden Seite der ersten Kammer (14) wirkt und in der Lage ist, die entsprechende Stange (13b) in der gleichen Richtung wie die Wirkung der ersten elastischen Mittel (12) zu bewegen;
und dadurch, dass es umfasst
mindestens ein Ventil (16), das zwischen den Kupplungsbuchsen (2, 3) und der Steuerungsvorrichtung (11) zwischengeschaltet ist und eine Spule (17) aufweist, die beweglich ist zwischen einer Bremskonfiguration, in der die erste und die zweite Kammer (14, 15) wechselseitig in Verbindung gebracht sind, wodurch sich die ersten elastischen Mittel (12) frei ausdehnen können, und eine Normalbetriebskonfiguration, bei der die erste Kammer (14) mit der zusätzlichen Leitung (7) in Verbindung gebracht ist und die zweite Kammer (15) mit einer Niederdruckleitung verbindbar ist, um die ersten elastischen Mittel (12) zum Lösen der automatischen Bremse und/oder Feststellbremse (G) zusammenzudrücken.

2. Vorrichtung (1) nach Anspruch 1, **dadurch gekennzeichnet, dass** auf die Spule (17) von gegenüberliegenden Seiten ein erster Raum (19a), der mit der zusätzlichen Leitung (7) in Verbindung steht und in der Lage ist, sie in Richtung der Normalbetriebskonfiguration zu schieben, und ein zweiter Raum (19b), in dem zweite elastische Mittel (20) untergebracht sind, wirken.

3. Vorrichtung (1) nach Anspruch 1 oder 2, **dadurch gekennzeichnet, dass** sie mindestens eine Hilfsleitung (8) umfasst, die mit der zusätzlichen Leitung (7) auf das Lösen der zweiten Kupplungsbuchse (3) von dem entsprechenden Kupplungsstecker (5) folgend verbindbar ist, wobei die erste und zweite Kammer (14, 15) in der Bremskonfiguration mit der Hilfsleitung (8) mit dem Ventil (16) in Verbindung stehen und in der Normalbetriebskonfiguration mit der zusätzlichen Leitung (7) bzw. mit der Hilfsleitung (8) mit dem Ventil (16) in Verbindung stehen.

4. Vorrichtung (1) nach Anspruch 3, **dadurch gekennzeichnet, dass** die Hilfsleitung (8) mit dem zweiten Raum (19b) in Verbindung steht, sich die Spule (17) auf die Verbindung der zweiten Kupplungsbuchse (3) mit dem entsprechenden Kupplungsstecker (5) folgend mit der zusätzlichen Leitung (7) unter Druck in Richtung der Normalbetriebskonfiguration bewegt und auf deren Abkuppeln folgend in Richtung der Bremskonfiguration bewegt, wobei die Hilfsleitung (8) mit der zusätzlichen Leitung (7) in Verbindung steht.

5. Vorrichtung (1) nach Anspruch 3 oder 4, **dadurch gekennzeichnet, dass** sie erste Ventilmittel (9) umfasst, die in der Lage sind, die zusätzliche Leitung (7) bzw. die Hilfsleitung (8) auf das An- und Abkuppeln der zweiten Kupplungsbuchse (3) von dem entsprechenden Kupplungsstecker (5) folgend zu isolieren und in Verbindung zu setzen.

6. Vorrichtung (1) nach einem oder mehreren der Ansprüche 2 bis 5, **dadurch gekennzeichnet, dass** die Hilfsleitung (8) mit der Steuerleitung (6) über ein zweites Einwegventil (10) verbunden ist.

7. Vorrichtung (1) nach einem oder mehreren der vorstehenden Ansprüche, **dadurch gekennzeichnet, dass** der fluidbetriebene Zylinder (13) vom doppeltwirkenden Typ ist und dass die den Kammern (14, 15) zugewandten Betriebsflächen der Stange (13b) im Wesentlichen gleich sind.

8. Vorrichtung (1) nach einem oder mehreren der vorstehenden Ansprüche, **dadurch gekennzeichnet, dass** sie Pumpmittel (21) umfasst, die zwischen der Steuerungsvorrichtung (11) und dem Ventil (16) zwischengeschaltet und manuell betreibbar sind, um die erste Kammer (14) des fluidbetriebenen Zylinders (13) zu versorgen, und dass sie mindestens einen Zu-/Ableitungskanal (25) umfasst, der zwischen dem Ventil (16) und der Steuerungsvorrichtung (11) zwischengeschaltet und parallel zu den Pumpmitteln (21) angeordnet ist.

9. Vorrichtung (1) nach Anspruch 8, **dadurch gekennzeichnet, dass** die Pumpmittel (21) vom doppeltwirkenden Typ sind.

10. Vorrichtung (1) nach Anspruch 8 oder 9, **dadurch gekennzeichnet, dass** sie mindestens eine Ventilvorrichtung (26) umfasst, die entlang des Zu-/Ableitungskanals (25) angeordnet und manuell bedienbar ist, um sie von einer offenen Konfiguration in eine geschlossene Konfiguration zu bewegen.

11. Vorrichtung (1) nach Anspruch 10, **dadurch gekennzeichnet, dass** die Ventilvorrichtung (26) Öffnungsmittel umfasst, die wirksam mit der zusätzlichen Leitung (7) verbunden sind und in der Lage sind, die Ventilvorrichtung selbst aus der geschlossenen Konfiguration in die offene Konfiguration zurückzubringen, wenn ein vordefinierter Druck des Arbeitsfluids entlang der zusätzlichen Leitung (7) erreicht ist.

12. Vorrichtung (1) nach Anspruch 10 oder 11, **dadurch gekennzeichnet, dass** die Ventilvorrichtung (26) als Folge des versehentlichen Lösens der Kupplungsbuchsen (2, 3) von den jeweiligen Kupplungssteckern (4, 5) betreibbar ist.

13. Vorrichtung (1) nach einem oder mehreren der vorstehenden Ansprüche, **dadurch gekennzeichnet, dass** der Zylinder (13) in fluidbetriebener Weise mit der Betriebsbremsanlage (F) des Anhängers verbunden ist.

14. Vorrichtung (1) nach Anspruch 13, **dadurch gekennzeichnet, dass** die Stange (13b) einen ersten Abschnitt (13b'), der mit den ersten elastischen Mitteln (12) wechselwirkt, und einen zweiten Abschnitt (13b"), der mit der automatischen Bremse und/oder Feststellbremse (G) wechselwirkt und in Bezug auf den ersten Abschnitt selbst beweglich ist, umfasst; zwischen dem ersten und dem zweiten Abschnitt (13b', 13b") eine dritte Kammer (22) definiert ist, die mit der Steuerleitung (6) verbunden ist und in der Lage ist, den zweiten Abschnitt (13b") zu bewegen, um die Aktivierung der automatischen Bremse und/oder Feststellbremse (G) auf den Druckanstieg entlang der Steuerleitung (6) folgend zu steuern.

## Revendications

1. Dispositif de freinage (1) pour remorques de machines agricoles, comprenant :
- un premier et un second organe d'accouplement femelle (2, 3) pouvant être associés à une remorque et capables de recevoir des organes d'accouplement mâles (4, 5) relatifs pouvant être associés à un véhicule de remorquage pour envoyer un fluide sous pression à l'intérieur des organes d'accouplement femelles (2, 3) respectifs ;
- au moins une conduite de commande (6) communiquant avec ledit premier organe d'accouplement femelle (2) et pouvant être raccordée au système de freinage de service (F) de la remorque, au moins une conduite supplémentaire (7) communiquant avec ledit second organe d'accouplement femelle (3) et pouvant être raccordée au frein automatique et/ou de stationnement (G) de la remorque ;
- un dispositif de commande (11) du frein automatique et/ou de stationnement (G) de la remorque comprenant un premier moyen élastique (12) capable d'activer le frein automatique et/ou de stationnement lui-même et au moins un cylindre actionné par fluide (13) capable d'interagir avec le premier moyen élastique lui-même ; ledit cylindre actionné par fluide (13) ayant au moins une première chambre (14) capable de déplacer la tige (13b) relative dans la direction opposée à l'action dudit premier moyen élastique (12) ;
**caractérisé en ce que** ledit cylindre (13) comporte au moins une deuxième chambre (15) agissant sur le côté opposé de ladite première chambre (14) et capable de déplacer la tige (13b) respective dans la même direction que l'action dudit premier moyen élastique (12) ;
et **en ce qu'**il comprend
au moins une soupape (16) intercalée entre lesdits organes d'accouplement femelles (2, 3) et ledit dispositif de commande (11) et ayant une bobine (17) mobile entre une configuration de freinage, dans laquelle lesdites première et deuxième chambres (14, 15) sont mutuellement placées en communication, permettant audit premier moyen élastique (12) de s'étendre librement, et une configuration de fonctionnement normal, dans laquelle ladite première chambre (14) est placée en communication avec ladite conduite supplémentaire (7) et ladite deuxième chambre (15) peut être raccordée à une conduite de pression plus basse de manière à comprimer ledit premier moyen élastique (12) afin de relâcher le frein automatique et/ou de stationnement (G).

2. Dispositif (1) selon la revendication 1, **caractérisé en ce que** sur ladite bobine (17) agissent, depuis des côtés opposés, un premier compartiment (19a) communiquant avec ladite conduite supplémentaire (7) et capable de la pousser vers la configuration de fonctionnement normal et un second compartiment (19b) dans lequel est logé un second moyen élastique (20).

3. Dispositif (1) selon la revendication 1 ou 2, **caractérisé en ce qu'**il comprend au moins une conduite auxiliaire (8) pouvant être raccordée à ladite conduite supplémentaire (7) à la suite du détachement dudit second organe d'accouplement femelle (3) vis-à-vis de l'organe d'accouplement mâle (5) relatif, où lesdites première et deuxième chambres (14, 15) sont placées en communication avec ladite conduite auxiliaire (8) avec ladite soupape (16) dans la configuration de freinage et sont placées en communication avec ladite conduite supplémentaire (7) et avec ladite conduite auxiliaire (8) respectivement, avec ladite soupape (16) dans la configuration de fonctionnement normal.

4. Dispositif (1) selon la revendication 3, **caractérisé en ce que** ladite conduite auxiliaire (8) communique avec ledit second compartiment (19b), ladite bobine (17) se déplaçant vers la configuration de fonctionnement normal à la suite du raccordement dudit second organe d'accouplement femelle (3) à l'organe d'accouplement mâle (5) relatif, avec ladite conduite supplémentaire (7) sous pression, et se déplaçant vers la configuration de freinage à la suite de désaccouplement de celle-ci avec ladite conduite auxiliaire (8) communiquant avec ladite conduite supplémentaire (7).

5. Dispositif (1) selon la revendication 3 ou 4, **caractérisé en ce qu'**il comprend un premier moyen de soupape (9) capable d'isoler et de placer en communication ladite conduite supplémentaire (7) et ladite conduite auxiliaire (8) respectivement, à la suite de l'accouplement et du désaccouplement du second organe d'accouplement femelle (3) vis-à-vis de l'organe d'accouplement mâle (5) relatif.

6. Dispositif (1) selon une ou plusieurs des revendications 2 à 5, **caractérisé en ce que** ladite conduite auxiliaire (8) est raccordée à ladite conduite de commande (6) à l'aide d'un second moyen de soupape unidirectionnel (10).

7. Dispositif (1) selon une ou plusieurs des revendications précédentes, **caractérisé en ce que** ledit cylindre actionné par fluide (13) est du type à double action et **en ce que** les surfaces fonctionnelles de ladite tige (13b) faisant face auxdites chambres (14, 15) sont sensiblement égales entre elles.

8. Dispositif (1) selon une ou plusieurs des revendications précédentes, **caractérisé en ce qu'**il comprend un moyen de pompage (21) interposé entre ledit dispositif de commande (11) et ladite soupape (16) et pouvant être manuellement actionné pour alimenter ladite première chambre (14) du cylindre actionné par fluide (13) et **en ce qu'**il comprend au moins un canal d'alimentation/d'évacuation (25) interposé entre ladite soupape (16) et ledit dispositif de commande (11) et agencé parallèlement audit moyen de pompage (21).

9. Dispositif (1) selon la revendication 8, **caractérisé en ce que** ledit moyen de pompage (21) est du type à double action.

10. Dispositif (1) selon la revendication 8 ou 9, **caractérisé en ce qu'**il comprend au moins un dispositif de soupape (26) agencé le long dudit canal d'alimentation/d'évacuation (25) et pouvant être manuellement actionné pour le déplacer d'une configuration ouverte à une configuration fermée.

11. Dispositif (1) selon la revendication 10, **caractérisé en ce que** ledit dispositif de soupape (26) comprend un moyen d'ouverture fonctionnellement raccordé à ladite conduite supplémentaire (7) et capable de ramener le dispositif de soupape lui-même de la configuration fermée à la configuration ouverte lors de l'atteinte d'une pression prédéfinie du fluide de travail le long de ladite conduite supplémentaire (7).

12. Dispositif (1) selon la revendication 10 ou 11, **caractérisé en ce que** ledit dispositif de soupape (26) peut fonctionner à la suite du détachement accidentel desdits organes d'accouplement femelles (2, 3) vis-à-vis des organes d'accouplement mâles (4, 5) relatifs.

13. Dispositif (1) selon une ou plusieurs des revendications précédentes, **caractérisé en ce que** ledit cylindre (13) est raccordé d'une manière actionnée par fluide audit système de freinage de service (F) de la remorque.

14. Dispositif (1) selon la revendication 13, **caractérisé en ce que** ladite tige (13b) comprend une première partie (13b') qui interagit avec ledit premier moyen élastique (12) et une seconde partie (13b") qui interagit avec le frein automatique et/ou de stationnement (G) et qui est mobile par rapport à la première partie elle-même ; entre ladite première et ladite seconde partie (13b', 13b") étant définie une troisième chambre (22) communiquant avec ladite conduite de commande (6) et capable de déplacer ladite seconde partie (13b") pour commander l'activation du frein automatique et/ou de stationnement (G) à la suite de l'augmentation de la pression le long de ladite conduite de commande (6).
